# EUROPÄISCHE PATENTSCHRIFT

(11) **EP 4 518 993 B1**
(45) Veröffentlichungstag und Bekanntmachung des Hinweises auf die Patenterteilung: **04.03.2026**
(21) Anmeldenummer: 23719418.8
(22) Anmeldetag: 24.04.2023
(51) Int. Cl.: B01D 29/15, B01D 29/27, B01D 29/56, B01D 29/68, B01D 29/94, B01D 36/02

(54) **FILTERVORRICHTUNG**
FILTER DEVICE
DISPOSITIF DE FILTRATION

(30) Priorität: 05.05.2022 DE 102022204446
(43) Veröffentlichungstag der Anmeldung: 12.03.2025
(73) Patentinhaber: Hydac Process Technology GmbH, 66538 Neunkirchen (DE)
(72) Erfinder: SCHLICHTER, Bernhard, 66123 Saarbrücken (DE); GERSTNER, Jörg Hermann, 66346 Püttlingen (DE); BUGROV, Dimitri, 66646 Marpingen (DE); SCHMIDT, Julian, 66589 Merchweiler (DE)
(74) Vertreter: Bartels und Partner, Patentanwälte
(86) Internationale Anmeldenummer: PCT/EP2023/060680
(87) Internationale Veröffentlichungsnummer: WO 2023/213599

(56) Entgegenhaltungen:
- US-A- 4 783 266
- US-A- 5 405 539
- US-B1- 6 217 757

## Beschreibung

Die Erfindung betrifft eine Filtervorrichtung mit den Merkmalen im Oberbegriff von Anspruch 1.

Um über längere Betriebszeiträume hinweg den sicheren und effizienten Betrieb von Filteranlagen zu ermöglichen, ist es, insbesondere bei größeren Anlagen, üblich, die beim Filtervorgang beteiligten Filterelemente rückzuspülen und dadurch zu regenerieren. Während jeweiliger Rückspülphasen wird das zu reinigende Filterelement durch einen Teilstrom des Filtrats in umgekehrter Richtung durchströmt, um den Schmutz vom Element abzulösen und zusammen mit der abströmenden Rückspülmenge auszutragen. Angesichts der hochgradigen Umweltschädlichkeit der mit den Verschmutzungen belasteten Rückspülflüssigkeit ist die Entsorgung problematisch. Zumindest bei größeren Mengen anfallender Spülflüssigkeit ist eine Nachbehandlung oder Aufbereitung erforderlich, wie eine Filtration zur Absonderung veraschbarer Verschmutzungen. Bei der Filtration von Schwerölen, wie sie beispielsweise zum Betrieb von Großdieseln, wie Schiffsdieseln benutzt werden, erschwert darüber hinaus die hohe Viskosität des Schweröls sowohl den Rückspülvorgang beim Primärfilter, der der aufbereitenden Filtervorrichtung vorgeschaltet ist, als auch den zur Aufbereitung durchzuführenden Filtervorgang.

Ein Primärfilter, der fachsprachlich auch mit Automatikfilter bezeichnet ist, ist beispielhaft in DE 10 2004 037 280 A1 aufgezeigt und betrifft eine Rückspülfiltervorrichtung für den Einsatz von Filterelementen, die in einem Filtergehäuse mit einem Filtereinlass und einem Auslass für das zu filtrierende Fluid aufnehmbar sind, wobei die Filterelemente für eine Filtration oder Rückspülung in beide Richtungen durchströmbar sind und wobei gleichzeitig die einen Filterelemente die Filtration vornehmen und zumindest ein anderes Filterelement zum Abreinigen seiner wirksamen Filterfläche rückspülbar ist.

Primär- oder Automatikfilter dienen in vielen Prozessanwendungen als Schutzfilter, wobei die anfallende Rückspülmenge bei der Rückspülung oftmals ohne weitere Behandlung wieder in den Prozesskreislauf abgegeben wird. So wird in der Ballastwasserbehandlung auf Schiffen in der ersten Behandlungsstufe Seewasser automatisch filtriert und die dabei erzeugte Rückspülflüssigkeit wieder ins Meer geleitet. Ähnlich verhält es sich bei Automatikfiltern, die im Kühlkreislauf eines Kraftwerks die Wärmetauscher vor groben Verunreinigungen aus dem Flusswasser schützen. Auch hier ist eine Ableitung der Rückspülflüssigkeit zurück in das Oberflächengewässer möglich. In einigen industriellen Prozessen kann es allerdings aufgrund des Fluids und seiner Inhaltsstoffe erforderlich sein, die Rückspülmenge wieder aufzubereiten, um das Fluid wiederzuverwenden und den Prozesskreislauf ohne Umweltkontakt schließen zu können.

Hierzu wurde in DE 10 2015 002 767 A1 bereits eine Filtervorrichtung vorgeschlagen, insbesondere zum Aufbereiten, vorzugsweise zum Filtrieren von Rückspülmengen, die von einem der Filtervorrichtung vorschaltbaren Filter stammen, mit
- einer Primärstufe zur Aufnahme der jeweiligen Rückspülmenge,
- einer Sekundärstufe zum Abfiltrieren der Rückspülmenge aus der Primärstufe und
- einer Tertiärstufe zur Rückführung der abgereinigten Rückspülmenge in einen Prozesskreislauf.

Dadurch, dass bei dieser bekannten Lösung mittels einer Steuereinrichtung eine portionsweise Zufuhr jeweiliger Rückspülmengen zum betreffenden Filterelement erfolgt, lässt sich eine sichere Filtration auch bei höherer Viskosität, beispielsweise im Rahmen der Schwerölfiltration durchführen. Die Steuereinrichtung weist dabei eine Steuerkammer mit einem Trennkolben auf, der die Steuerkammer in einen ersten und in einen zweiten Fluidraum unterteilt, wobei der erste Fluidraum der Aufnahme der jeweiligen Rückspülmenge dient und der zweite Fluidraum mit einem Druckgas mit einem vorgebbaren Arbeitsdruck beaufschlagbar ist, so dass die Rückspülmenge mittels des Trennkolbens aus der ersten Steuerkammer heraus in eine sich anschließende Filterkammer mit Filterelement verdrängt wird, die die derart filtrierte Rückspülmenge in den Prozesskreislauf dergestalt aufbereitet zurückführt. Obwohl diese bekannte Lösung zu sehr guten Aufbereitungsergebnissen für die Rückspülmenge aus Primär- oder Automatikfiltern führt, hat sich in der Praxis gezeigt, dass die bekannte Lösung ihre Grenzen findet, wenn große Mengen an Rückspülfluid anfallen. Die anfallende Rückspülmenge bei einem Automatikfilter ist stark abhängig von den Prozessbedingungen und kann insoweit sehr stark variieren, insbesondere zu sehr hohen Mengen an Rückspülflüssigkeit für die Nachbehandlung führen. Dadurch, dass bei der bekannten Lösung der Trennkolben für die Aufnahme an Rückspülfluid und für deren Weiterleiten an die Filterkammer jedes Mal ein- bzw. auszufahren ist, ist ein kontinuierlicher Betrieb nicht möglich, so dass insbesondere bei großen Mengen an Rückspülfluid die bekannte Rückspülmengenaufbereitungsanlage ihre Grenzen findet.

Die US 4 783 266 A beschreibt eine Filtervorrichtung, insbesondere zum Aufbereiten, vorzugsweise zum Filtrieren, von Rückspülmengen, die von einem der Filtervorrichtung vorschaltbaren Filter stammen, mit einer Primärstufe zur Aufnahme der jeweiligen Rückspülmenge, einer Sekundärstufe zum Abfiltrieren der Rückspülmenge aus der Primärstufe und einer Tertiärstufe zur Rückführung der abgereinigten Rückspülmenge in einen Prozesskreislauf, wobei in der Primärstufe ein Stromteiler eingesetzt ist, der bei Überschreiten einer vorgebbaren Fluidmenge in der Primärstufe die dahingehende Überschussmenge unter Umgehen der Sekundärstufe in die Tertiärstufe weiterleitet.

Weitere Filtervorrichtungen gehen aus der US 5 405 539 A und der US 6 217 757 B1 hervor.

Ausgehend von diesem Stand der Technik liegt der Erfindung die Aufgabe zugrunde, die bekannte Rückspülfluid-Filtervorrichtung weiter zu verbessern, insbesondere eine geeignete Lösung auch für große Rückspülmengen anzubieten. Eine dahingehende Aufgabe löst eine Filtervorrichtung mit den Merkmalen des Patentanspruches 1 in seiner Gesamtheit.

Gemäß dem Kennzeichen von Anspruch 1 ist vorgesehen, dass die Primärstufe einen drucklos gehaltenen Vorlauftank aufweist, der einen Zulauf für die jeweilige Rückspülmenge aus dem Filter und einen Ablauf für die Abgabe der dahingehenden Rückspülmenge an die Sekundärstufe aufweist, und dass der Stromteiler aus einem Siebkorb gebildet ist, der oberhalb einer vorgebbaren Füllstandsuntergrenze im Vorlauftank angeordnet über eine Fluidverbindung mit der Tertiärstufe in Verbindung steht, in die das Rückspülmengenfiltrat der Sekundärstufe abgebbar ist.

Dadurch, dass in der Primärstufe ein Stromteiler eingesetzt ist, der bei Überschreiten einer vorgebbaren Fluidmenge in der Primärstufe die dahingehende Überschussmenge unter Umgehen der Sekundärstufe in die Tertiärstufe weiterleitet, ist eine Lösung geschaffen, mit der ein kontinuierlicher Dauerbetrieb im Rahmen der Rückspülfluidaufbereitung gegeben ist, so dass auch ausgesprochen große Mengen von Rückspülfluid sicher wieder aufbereitet in den Prozesskreislauf zurückgeführt werden können.

Die Lösung ist sehr prozesssicher und der angesprochene Stromteiler erlaubt eine Art Bypass-Betrieb unter Einsatz unterschiedlicher Filterstufen, wobei eine Art Feinfilterstufe fortlaufend anfallende Rückspülmengen filtriert und bei Überschussmengen diese über den Stromteiler abgezweigt einer schnell durchzuführenden Grobfiltration unterzogen werden, so dass dergestalt auch sehr große Mengen von Rückspülfluid beherrschbar sind. Letztendlich gelangen die Restfluidmengen sowohl im Rahmen der Feinfiltration als auch im Rahmen der Grobfiltration in die sich anschließende Tertiärstufe, die die Abgabe der dahingehend abgereinigten Rückspülmengen in den ansonsten geschlossenen Prozesskreislauf des Systems ermöglicht.

Fällt kurzfristig eine noch größere Menge von Rückspülflüssigkeit an und übersteigt dabei der Flüssigkeitspegel innerhalb der Primärstufe, in Form eines drucklos gehaltenen Vorlauftanks, die Einbauhöhe des Filter- oder Siebkorbes, fließt ein zusätzlicher, nunmehr aber unbehandelter Teilstrom durch die obere Öffnung des Siebkorbes über dessen Bodenseite in Richtung der Tertiärstufe ab. Auf diese Weise ist sichergestellt, dass der Vorlauftank der Rückspülmengen-Aufbereitungseinheit niemals überlaufen kann und auch bei maximal anfallender Rückspülmenge es niemals zu einem Rückstau kommt, der letztlich zur Abschaltung des Rückspül-Aufbereitungsfilters führen würde. Unabhängig von den vorstehenden Betrachtungen ist die Rückspülmengen-Aufbereitungseinheit natürlich auch dann geeignet, wenn diskontinuierlich und nur in geringem Umfang vonseiten des Primär- oder Automatikfilters aufzubereitende Rückspülmengen an die erfindungsgemäße Filtervorrichtung gelangen.

Bei einer weiteren bevorzugten Ausführungsform der erfindungsgemäßen Filtervorrichtung ist vorgesehen, dass der Stromteiler eine Rückspüleinrichtung aufweist, die diesen von Verschmutzungen abreinigt, die auf die Unfiltratseite der Primärstufe gelangen. Vorzugsweise ist dabei die Rückspüleinrichtung für den Stromteiler aus einem antreibbaren Rückspülarm gebildet, der innenumfangsseitig entlang des Siebkorbes verfahrbar ist und ein Rückspülfluid von innen nach außen durch die Siebstruktur des Siebkorbes hindurch führt. Um das insoweit zylindrische Filtersieb bei Bedarf abreinigen zu können, ist also axial im Filter- oder Siebkorb eine Spüleinrichtung angeordnet, die beispielsweise mittels Sprühdüsen sauberes Fluid, wie Leitungswasser, entgegen der Filtrationsrichtung mit Druck von innen nach außen durch das Filter- oder Siebmaterial des Korbes drückt.

Der beim dahingehenden Rückspülvorgang abgelöste Schmutz kann dann in den Vorlauf- oder Vorlagetank sedimentieren und wird im Rahmen der üblich zu behandelnden Rückspülflüssigkeit schließlich zu der Sekundärstufe gebracht, die aus einzelnen Filtereinheiten besteht, die einen Beutel- oder Taschenfilter aufweisen, der mit seiner Unfiltratseite an die Primärstufe und mit seiner Filtratseite an die Tertiärstufe angeschlossen ist. Auf diese Art und Weise kann der Vorlauftank von Verschmutzungen auch im langandauernden Betrieb freigehalten werden. Vorzugsweise ist dabei vorgesehen, dass die Einströmung vonseiten des Primär- oder Automatikfilters in den Vorlauftank grundsätzlich unterhalb der Bodenseite des Filter- oder Siebkorbes erfolgt und außerhalb der Längsachse in einer tangentialen Anströmung, so dass es im Vorlauftank zu einer Zyklonalströmung kommt.

Vorzugsweise ist dabei zur Überwachung des Anlagenzustandes vorgesehen, den Füllstand im Vorlauftank zu überwachen. Dergestalt kann beispielsweise an eine übergeordnete Steuerung, die unter anderem den Primär- oder Automatik-Rückspülfilter steuert, ein Signal gesendet werden, sobald Teilströme über den Siebkorb bzw. dem derart gebildeten Überlauf in Richtung der Tertiärstufe erzeugt werden.

Bei einer besonders bevorzugten Ausführungsform der erfindungsgemäßen Filtervorrichtung ist vorgesehen, dass mehrere Filtereinheiten in Parallelanordnung zueinander derart verschaltet sind, dass mindestens ein Beutel- oder Taschenfilter einer Filtereinheit gegen eine Neueinheit tauschbar ist, wohingegen die anderen Filtereinheiten weiter die anfallenden Rückspülmengen von Verschmutzungen abreinigen. Dergestalt ist ein Filtertausch mit Beutel- oder Taschenfiltern ermöglicht, ohne die fortlaufende Filtration mittels der Sekundärstufe unterbrechen zu müssen.

Im Folgenden wird die erfindungsgemäße Lösung anhand eines Ausführungsbeispiels näher erläutert. Dabei zeigen in prinzipieller und nicht maßstäblicher Darstellung die
- Fig. 1: in der Art eines vereinfachten Prozessbildes die wesentlichen Komponenten der Filtervorrichtung für die Rückspülmengenaufbereitung;
- Fig. 2: eine perspektivische Draufsicht auf die wesentlichen Komponenten einer solchen Anlage nach der Fig. 1; und
- Fig. 3: eine vereinfachte Darstellung eines in der Filtervorrichtung nach den Fig. 1 und 2 zum Einsatz kommenden Beutel- oder Taschenfilters.

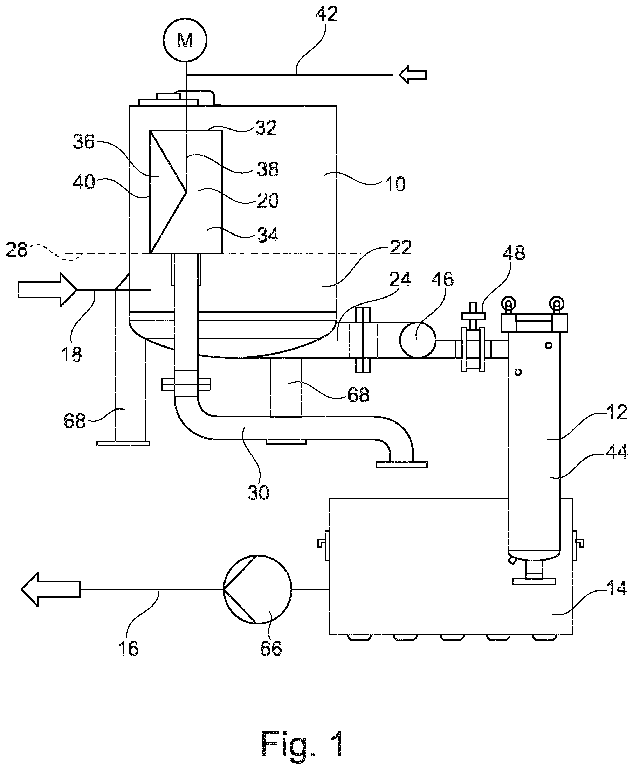

Wie die Fig. 1 zeigt, weist die Filtervorrichtung zur Rückspülmengen-Aufbereitung eine Primärstufe 10 zur Aufnahme der jeweiligen Rückspülmenge auf sowie eine Sekundärstufe 12 zum Abfiltrieren der Rückspülmenge aus der Primärstufe 10. Ferner ist eine Tertiärstufe 14 zur Rückführung der abgereinigten Rückspülmenge in einen in der Fig. 1 nur teilweise dargestellten Prozesskreislauf 16 eines Gesamtsystems vorgesehen. Die Primärstufe 10 weist einen Fluideingang 18 auf, der Teil des Prozesskreislaufes 16 ist und der in Pfeilrichtung gesehen das Einströmen von Rückspülfluid in tangentialer Richtung erlaubt, so dass innerhalb der Primärstufe 10 eine zyklonale Eingangsströmung erreicht ist. Der Fluideingang 18 ist, was nicht näher dargestellt ist, an den Fluidausgang für Rückspülmengen-Fluid, beispielsweise an den dahingehenden Ausgang der Rückspülfiltervorrichtung nach der DE 10 2004 037 280 A1 fluidführend angeschlossen.

**In** der Primärstufe 10 ist ein Stromteiler 20 eingesetzt, der bei Überschreiten einer vorgebbaren Fluidmenge in der Primärstufe 10 die dahingehende Überschussmenge unter Umgehung der filtrierenden Sekundärstufe 12 direkt in die Tertiärstufe 14 weiterleitet.

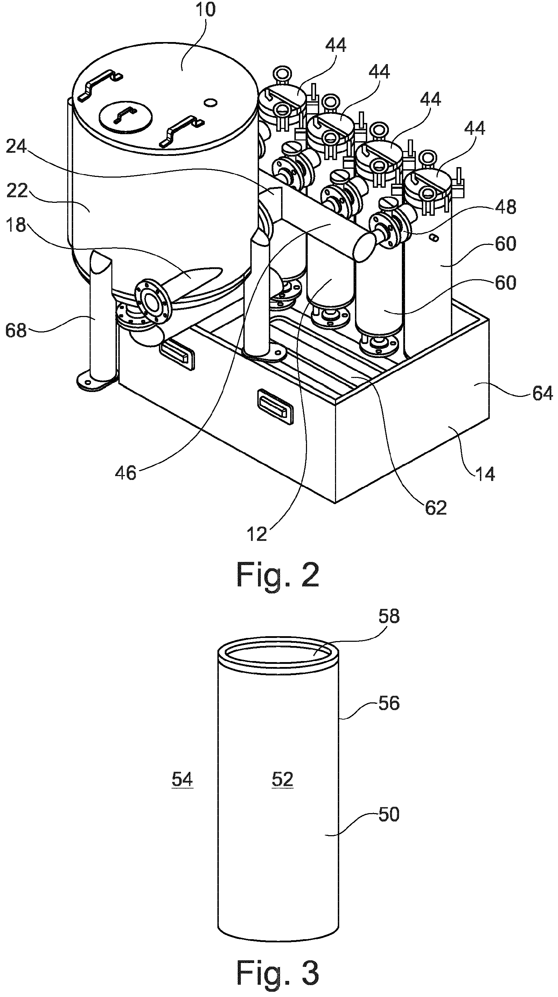

Wie weiter die Fig. 1 und 2 zeigen, weist die Primärstufe 10 einen drucklos gehaltenen Vorlauftank 22 auf, der über den Fluideingang 18 einen Zulauf für die jeweilige Rückspülmenge aus der Rückspülfiltervorrichtung aufweist sowie einen Ablauf 24 für die Abgabe der dahingehenden Rückspülmenge an die Sekundärstufe 12. Drucklos bedeutet, dass der Vorlauftank 22 im Innern Umgebungsdruck aufweist.

Der angesprochene Stromteiler 20 ist aus einem hohlzylindrischen Siebkorb 26 gebildet, der oberhalb einer vorgebbaren Füllstandsuntergrenze 28 im Vorlauftank 22 angeordnet ist und über eine Fluidverbindung 30 mit der Tertiärstufe 14 in Verbindung steht, in die das Rückspülmengenfiltrat der Sekundärstufe 12 abgebbar ist. Der Siebkorb 26 bildet mit seiner oberen Öffnung 32 einen Überlauf für eine Überschussmenge im Vorlauftank 22 aus, wobei die dahingehende den oberen Rand des Siebkorbes 26 überströmende Überschussmenge über das Innere 34 des Siebkorbes 26 und die Fluidverbindung 30 an die Tertiärstufe 14 abgebbar ist. Die dahingehende Fluidverbindung 30 ist aus einem Rohr gebildet, das mit seinem einen offenen Ende in die Bodenseite des Siebkorbes 26 einmündet und nach bodenseitigem Passieren des Vorlauftanks 22 mit seinem anderen offenen Ende oberhalb der Tertiärstufe 14 ausmündet.

Wie sich des Weiteren aus der Fig. 1 ergibt und was in Fig. 2 nicht dargestellt ist, weist der Stromteiler 20 eine Rückspüleinrichtung 36 auf, die in der Fig. 1 nur prinzipiell wiedergegeben ist. Die Rückspüleinrichtung 36 erlaubt die Außenseite des Siebkorbes 26 von Verschmutzungen abzureinigen, die auf die Unfiltratseite der Primärstufe 10 gelangen, indem diese eben in den Vorlauftank 22 eingetragen werden und sich auf der Außenseite des Siebmaterials des Siebkorbes 26 absetzen. Die Rückspüleinrichtung 36 für den Stromteiler 20 weist einen antreibbaren Rückspülarm 38 auf, der mittels eines Elektromotors M entlang der Innenseite des Siebkorbes 26 umlaufend verfahrbar angetrieben ist. Gemäß der Darstellung nach der Fig. 1 weist der Rückspülarm 38 endseitig eine konisch verlaufende Spüleinrichtung 40 auf, die mit einzelnen Sprühdüsen (nicht dargestellt) versehen die Möglichkeit eröffnet, sauberes Fluid, wie beispielsweise Leitungswasser, entgegen der Filtrationsrichtung mit Druck von innen nach außen durch das Filter- oder Siebmaterial des Siebkorbes 26 zu drücken, so dass dieser von Partikelverschmutzung abgereinigt wird, die schwerkraftbedingt in Richtung des Bodens des Vorlauftanks 22 absinkt. Für die Zufuhr des sauberen Fluids dient eine Spülleitung 42, die mit dem Rückspülarm 38 zusammenwirkt und das Verteilen von Reinigungsflüssigkeit über die Sprühdüsen der Spüleinrichtung 40 erlaubt. Die Strömungsrichtung des Spülfluids ist in Fig. 1 wiederum mit einer Pfeildarstellung wiedergegeben.

Wie sich insbesondere aus der Fig. 2 ergibt, ist die Sekundärstufe 12 aus einzelnen Filtereinheiten 44 gebildet, wobei im vorliegenden Fall vier Filtereinheiten 44 zum Einsatz kommen. Die vier Filtereinheiten 44 werden kopfseitig von einer horizontal verlaufenden Verteilerleitung 46 versorgt, die an den Ablauf 24 des Vorlauftanks 22 angeschlossen ist. Zwischen der Verteilerleitung 46 und jedem kopfseitigen Eingang einer Filtereinheit 44 ist ein von Hand betätigbares Absperrventil 48 geschaltet. In jeder Filtereinheit 44 ist ein Beutel- oder Taschenfilter 50 eingesetzt, wie er beispielhaft in seiner Betriebsstellung in der Fig. 3 gezeigt ist. Der jeweilige Beutel- oder Taschenfilter 50 ist mit seiner Unfiltratseite 52 an die Primärstufe 10 und mit seiner Filtratseite 54 an die Tertiärstufe 14 angeschlossen. Das zu reinigende Fluid durchströmt den Beutel respektive die Tasche gemäß der Darstellung nach der Fig. 3 von innen nach außen und etwaig vorhandene partikuläre Verschmutzung im Rückspülfluid lagert sich von innen am Elementmaterial 56 des Filters an. Im vorliegenden Fall ist der Filter nach oben hin offen und bodenseitig verschlossen, so dass das Unfiltrat ausgehend vom geöffneten Absperrventil 48 von oben her in die freigelassene Öffnung 58 einströmt. Das durch das Elementmaterial 56 abgereinigte Rückspülfluid gelangt dann auf die Filtratseite 54, gebildet aus einem Hohlraum zwischen der Außenumfangsseite des zylindrischen Elementmaterials 56 und der zylindrischen Innenumfangsseite des Filtergehäuses 60 für eine Filtereinheit 44.

Wie sich weiter aus der Fig. 2 ergibt, stehen die Filtergehäuse 60 der einzelnen Filtereinheiten 44 bodenseitig auf einem Rost 62 der Tertiärstufe 14 auf, die insoweit aus einem rechteckförmigen Abgabetank 64 gebildet ist. Insoweit kann sich das mittels den Filtereinheiten 44 abgereingte Rückspülfluid im Abgabetank 64 sammeln, bevor es mittels einer Unterdruck- oder Vakuumpumpe 66 in den Prozesskreislauf 16 in Pfeilrichtung gesehen zurückgeführt wird.

Dahingehende Beutel- oder Taschenfilter 50 gemäß der Darstellung nach der Fig. 3 können sowohl als Oberflächenfilter als auch als Tiefenfilter eingesetzt werden. Vorzugsweise kommt für das Elementmaterial 56 ein textiles Filtermedium zum Einsatz, wobei jedenfalls im Rahmen einer Art Feinfiltration die Filterfeinheit für den Beutel- oder Taschenfilter 50 deutlich feiner gewählt ist als die Filterfeinheit für den Siebkörper des Siebkorbes 26. Insofern kann sich jedenfalls das abgereinigte Rückspülmengenfluid im Abgabetank 64 beruhigen, bevor es über die Unterdruckpumpe 66 zurück in den Fluidkreislauf 16 gefördert wird.

Wie sich des Weiteren aus der Fig. 2 ergibt, ist der Vorlauftank 22 über einzelne Ständerbeine 68 gegenüber der Oberseite des Abgabetanks 64 aufgeständert, so dass die Fluidverbindung 30 zum Siebkorb 26 mit ihrem unterem freien Ende oberhalb des Abgabetanks 64 ausmündet. In jedem Fall kommt der Stromteiler 20 nur dann zum Einsatz, wenn der Fluidspiegel an Rückspülmenge die Füllstandsuntergrenze 28 im Vorlauftank 22 überschreitet; ansonsten gelangt die abzureinigende Rückspülmenge über den Fluideingang 18 und über das Innere des Vorlauftanks 22 direkt in den Ablauf 24 und von da aus weiter über die Verteilerleitung 46 und die einzelnen geöffneten Absperrventile 48 gleichermaßen zu den Filtereinheiten 44. Da gemäß der Darstellung nach der Fig. 2 mehrere Filtereinheiten 44 in Parallelanordnung zueinander derart verschaltet sind, dass mindestens ein Beutel- oder Taschenfilter 50 einer Filtereinheit 44 von oben her gegen eine Neueinheit (siehe Fig. 3) tauschbar ist, können die anderen Filtereinheiten 44 weiter die anfallenden Rückspülmengen von Verschmutzungen abreinigen, so dass ein fortlaufender Aufbereitungsprozess für Rückspülmengen ermöglicht ist.

Wie bereits dargelegt, können die anfallenden Rückspülmengen eines Automatikfilters, beispielsweise nach der Lehre der DE 10 2004 037 280 A1 stark abhängig von den Prozessbedingungen sein und mithin sehr stark variieren. Die Spülhäufigkeit ist unmittelbar abhängig von der Schmutzkonzentration und der gewählten Filterfeinheit im Primärfilter. Ein dahingehender Filter mittlerer Größe erzeugt beispielsweise pro Rückspülung eine Flüssigkeitsmenge von 500 Litern während einer Spüldauer von ca. 10 Sekunden. Eine typische Auslegung sieht vor, dass ein Filter etwa viermal pro Stunde gespült wird; demnach würden 2 m³/h Rückspülflüssigkeit zur Weiterbehandlung anfallen.

Da die Schmutzkonzentration auf der Unfiltratseite eines Rückspülfilters selten konstant ist und auch die Volumenströme schon mal variieren können, spülen solche Filter in der Praxis auch häufiger; von der kontinuierlichen Dauerspülung bis hin zu einer Spülung pro Stunde ist im Grunde somit alles möglich und auch in der Annahme realistisch. Für das hier angenommene Beispiel bedeutet dies, dass bei diesem einen Rückspülfilter mittlerer Größe eine Rückspülmenge von 0,5 m³/h bis zu 180 m³/h anfallen könnten. Soll die anfallende Rückspülmenge im Rahmen einer zweiten Stufe, also mit der hier vorgestellten erfindungsgemäßen Rückspülmengen-Aufbereitungseinrichtung behandelt werden, so stellt sich nun die Frage, wie groß diese Behandlungsstufe zu dimensionieren ist. Wenn eine Unterbrechung des Gesamtprozesses ausgeschlossen wird, d. h. ein Abschalten des Rückspülfilters als Primär- oder Automatikfilter, müsste die Rückspülmengenaufbereitung auf den schlechtesten Fall ausgelegt werden, d. h. zur Behandlung von 180 m³/h ausgelegt sein. Eine solche Auslegung würde schließlich zu sehr großen und damit kostspieligen Vorrichtungen führen, wofür ein dahingehender Lösungsansatz in DE 10 2015 002 767 A1 aufgezeigt ist, was die Realisierung einer solchen Gesamtlösung erfahrungsgemäß in Frage stellt. Die damit einhergehende Investition wäre unverhältnismäßig teuer.

Da oftmals aber nur die Prozesssicherheit im Vordergrund steht, ist es nun mehr als sinnvoll erkannt worden, eine kleinere Rückspülmengen-Aufbereitungsvorrichtung nach der Erfindung zu realisieren und dabei in Kauf zu nehmen, dass zeitweise nicht die gesamte Rückspülmenge über die Filtereinheiten 44 optimal feinfiltriert werden, sondern dass je nach anfallender Spülmenge Teilströme über den gröberen Filter mit dem Siebkorb 26 weitergeleitet werden oder notfalls sogar über die Bypassfunktion des Stromteilers 20, ohne weitere Behandlung über die Tertiärstufe 14, in den Prozesskreislauf 16 rückgeführt werden. Diese Lösung hat so keine Entsprechung im Stand der Technik.

## Patentansprüche

1. **[ursprünglicher Anspruch 1]** Filtervorrichtung, insbesondere zum Aufbereiten, vorzugsweise zum Filtrieren, von Rückspülmengen, die von einem der Filtervorrichtung vorschaltbaren Filter stammen, mit
- einer Primärstufe (10) zur Aufnahme der jeweiligen Rückspülmenge,
- einer Sekundärstufe (12) zum Abfiltrieren der Rückspülmenge aus der Primärstufe (10) und
- einer Tertiärstufe (14) zur Rückführung der abgereinigten Rückspülmenge in einen Prozesskreislauf (16),
wobei in der Primärstufe (10) ein Stromteiler (20) eingesetzt ist, der bei Überschreiten einer vorgebbaren Fluidmenge in der Primärstufe (10) die dahingehende Überschussmenge unter Umgehen der Sekundärstufe (12) in die Tertiärstufe (14) weiterleitet,
**dadurch gekennzeichnet,**
**[aus dem ursprünglichen Anspruch 2]** dass die Primärstufe (10) einen drucklos gehaltenen Vorlauftank (22) aufweist, der einen Zulauf (18) für die jeweilige Rückspülmenge aus dem Filter und einen Ablauf (24) für die Abgabe der dahingehenden Rückspülmenge an die Sekundärstufe (12) aufweist, und
**[aus dem ursprünglichen Anspruch 3]** dass der Stromteiler (20) aus einem Siebkorb (26) gebildet ist, der oberhalb einer vorgebbaren Füllstandsuntergrenze (28) im Vorlauftank (22) angeordnet über eine Fluidverbindung (30) mit der Tertiärstufe (14) in Verbindung steht, in die das Rückspülmengenfiltrat der Sekundärstufe (12) abgebbar ist.

2. Filtervorrichtung nach Anspruch 1, **dadurch gekennzeichnet, dass** der Siebkorb (26) mit einer oberen Öffnung (32) einen Überlauf für eine Überschussmenge im Vorlauftank (22) bildet, die über das Innere (34) des Siebkorbes (26) und die Fluidverbindung (30) an die Tertiärstufe (14) abgebbar ist.

3. Filtervorrichtung nach Anspruch 1 oder 2, **dadurch gekennzeichnet, dass** der Stromteiler (20) eine Rückspüleinrichtung (36) aufweist, die diesen von Verschmutzungen abreinigt, die auf die Unfiltratseite der Primärstufe (10) gelangen.

4. Filtervorrichtung nach Anspruch 3, **dadurch gekennzeichnet, dass** die Rückspüleinrichtung (36) für den Stromteiler (20) aus einem antreibbaren Rückspülarm (38) gebildet ist, der innenumfangsseitig entlang des Siebkorbes (26) verfahrbar ist und ein Rückspülfluid von innen nach außen durch die Siebstruktur des Siebkorbes (26) hindurchführt.

5. Filtervorrichtung nach einem der vorstehenden Ansprüche, **dadurch gekennzeichnet, dass** die Sekundärstufe (12) aus einzelnen Filtereinheiten (44) besteht, die einen Beutel- oder Taschenfilter (50) aufweisen, der mit seiner Unfiltratseite (52) an die Primärstufe (10) und mit seiner Filtratseite (54) an die Tertiärstufe (14) angeschlossen ist.

6. Filtervorrichtung nach Anspruch 5, **dadurch gekennzeichnet, dass** mehrere Filtereinheiten (44) in Parallelanordnung zueinander derart verschaltet sind, dass mindestens ein Beutel- oder Taschenfilter (50) einer Filtereinheit (44) gegen eine Neueinheit tauschbar ist, wohingegen die anderen Filtereinheiten (44) weiter die anfallenden Rückspülmengen von Verschmutzungen abreinigen.

7. Filtervorrichtung nach Anspruch 6, **dadurch gekennzeichnet, dass** die Filterfeinheit des Siebkorbes (26) gröber gewählt ist als die Filterfeinheit für den Beutel- oder Taschenfilter (50) einer jeweiligen Filtereinheit (44).

8. Filtervorrichtung nach einem der vorstehenden Ansprüche, **dadurch gekennzeichnet, dass** mittels einer Fluidpumpe, vorzugsweise in Form einer Unterdruckpumpe (66), das Rückspülmengenfiltrat der Tertiärstufe (14) in den sich anschließenden Prozesskreislauf (16) rückführbar ist.

## Claims

1. **[Original claim 1]** Filter device, in particular for processing, preferably for filtering backflush quantities which originate from a filter which can be arranged upstream of the filter device, having
- a primary stage (10) for receiving the respective backflush quantity,
- a secondary stage (12) for filtering off the backflush quantity from the primary stage (10) and
- a tertiary stage (14) for returning the cleaned backflush quantity to a process cycle (16),
a flow divider (20) being inserted in the primary stage (10), which flow divider, if a predefinable fluid quantity in the primary stage (10) is exceeded, transfers the corresponding excess quantity into the tertiary stage (14) while bypassing the secondary stage (12),
**characterised in that**
**[from original claim 2]** the primary stage (10) has a feed tank (22) which is kept depressurised and has an inlet (18) for the respective backflush quantity from the filter and an outlet (24) for discharging the aforementioned backflush quantity to the secondary stage (12), and
**[from original claim 3]** that the flow divider (20) is formed of a screen basket (26) which is arranged above a predefinable lower fill level limit (28) in the feed tank (22) and is connected via a fluid connection (30) to the tertiary stage (14) into which the backflush quantity filtrate from the secondary stage (12) can be discharged

2. Filter device according to claim 1, **characterised in that** the screen basket (26) forms an overflow with an upper opening (32) for an excess quantity in the feed tank (22) which can be discharged to the tertiary stage (14) via the interior (34) of the screen basket (26) and the fluid connection (30).

3. Filter device according to either claim 1 or claim 2, **characterised in that** the flow divider (20) has a backflushing device (36) which cleans said flow divider of contamination that reaches the unfiltered medium side of the primary stage (10).

4. Filter device according to claim 3, **characterised in that** the backflushing device (36) for the flow divider (20) is formed of a drivable backflush arm (38) which can be moved along the screen basket (26) on the inner circumference thereof and guides a backflush fluid from inside to outside through the screen structure of the screen basket (26).

5. Filter device according to any of the preceding claims, **characterised in that** the secondary stage (12) consists of individual filter units (44) which comprise a bag or pocket filter (50) that is connected to the primary stage (10) with its unfiltered medium side (52) and to the tertiary stage (14) with its filtrate side (54).

6. Filter device according to claim 5, **characterised in that** a plurality of filter units (44) are interconnected in parallel arrangement in such a manner that at least one bag or pocket filter (50) of a filter unit (44) can be exchanged for a new unit, whereas the other filter units (44) continue to clean the arising backflush quantities of contamination.

7. Filter device according to claim 6, **characterised in that** the filter grade of the screen basket (26) is selected to be coarser than the filter grade for the bag or pocket filter (50) of a respective filter unit (44).

8. Filter device according to any of the preceding claims, **characterised in that** the backflush quantity filtrate of the tertiary stage (14) can be returned to the adjoining process cycle (16) by means of a fluid pump, preferably in the form of a vacuum pump (66).

## Revendications

1. **[Revendication 1 d'origine]** Installation de filtration, en particulier pour le traitement, de préférence pour la filtration de quantités de lavages en retour, qui proviennent d'un filtre pouvant être monté en amont de l'installation de filtration, comprenant
- un étage (10) primaire de réception de la quantité respective de lavage en retour,
- un étage (12) secondaire de séparation par filtration de la quantité de lavage en retour de l'étage (10) primaire, et
- un étage (14) tertiaire de retour dans un circuit (16) de processus de la quantité épurée de lavage en retour,
dans laquelle il est inséré, dans l'étage (10) primaire, un séparateur (20) de courant qui, si une quantité de fluide pouvant être donnée à l'avance est dépassée dans l'étage (10) primaire, achemine la quantité en excès qui s'ensuit dans l'étage (14) tertiaire en contournant l'étage (12) secondaire,
**caractérisée**
**[à partir de la revendication 2 d'origine]** en ce que l'étage (10) primaire a une cuve (22) de tête maintenue sans pression, qui a une entrée (18) pour la quantité respective de lavage en retour provenant du filtre et une sortie (24) pour donner la quantité de lavage en retour qui s'ensuit à l'étage (12) secondaire, et
**[à partir de la revendication 3 d'origine]** en ce que le diviseur (20) de courant est formé d'un panier (26) d'essorage qui, disposé au-dessus d'une limite (28) inférieure de niveau pouvant être donnée à l'avance dans la cuve (22) de tête, est en communication par une communication (30) fluidique avec l'étage (14) tertiaire, auquel le filtrat de la quantité de lavage en retour de l'étage (12) secondaire peut être donné.

2. Installation de filtration suivant la revendication 1, **caractérisée en ce que** le panier (26) d'essorage forme, par une ouverture (32) supérieure, un déversoir pour une quantité en excès dans la cuve (22) de tête, qui peut être donné à l'étage (14) tertiaire en passant par l'intérieur (34) du panier (26) d'essorage et la communication (30) fluidique.

3. Installation de filtration suivant la revendication 1 ou 2, **caractérisée en ce que** le diviseur (20) de courant a un dispositif (36) de lavages en retour, qui épure celui-ci des impuretés, qui arrivent du côté du non filtrat de l'étage (10) primaire.

4. Installation suivant la revendication 3, **caractérisée en ce que** le dispositif (36) de lavage en retour du diviseur (20) de courant est formé d'un bras (38) de lavage en retour qui peut être entraîné, et qui peut être déplacé du côté du pourtour intérieur le long du panier (26) d'essorage et un fluide de lavage en retour peut passer de l'intérieur à l'extérieur dans la structure d'essorage du panier (26) d'essorage.

5. Installation de filtration suivant l'une des revendications précédentes, **caractérisée en ce que** l'étage (12) secondaire est constitué d'unités (44) individuelles de filtre, qui ont un filtre (50) à sac ou à poche, qui est raccordé par son côté (52) de non filtrat à l'étage (10) primaire et à son côté (54) de filtrat à l'étage (14) tertiaire.

6. Installation de filtration suivant la revendication 5, **caractérisée en ce que** plusieurs unités (44) de filtre sont montées suivant un agencement en parallèle les unes par rapport aux autres, de manière à ce qu'au moins un filtre (50) à sac ou à poche d'une unité (44) de filtre puisse être remplacé par une unité nouvelle, tandis que les autres unités (44) de filtre continuent à épurer d'impuretés les quantités de lavage en retour se produisant.

7. Installation de filtration suivant la revendication 6, **caractérisée en ce que** l'unité de filtre du panier (26) d'essorage est choisie plus grossière que l'unité de filtre pour le filtre (50) à sac ou à poche de l'unité (44) de filtre respective.

8. Installation de filtration suivant l'une des revendications précédentes, **caractérisée en ce qu'**au moyen d'une pompe à filtre, de préférence sous la forme d'une pompe (66) à dépression, le filtrat de la quantité de lavage en retour de l'étage (14) tertiaire peut être retourné au circuit (16) de traitement se raccordant.
